# EUROPÄISCHE PATENTSCHRIFT

(11) **EP 1 827 954 B1**
(45) Veröffentlichungstag und Bekanntmachung des Hinweises auf die Patenterteilung: **02.12.2009**
(21) Anmeldenummer: 05823299.2
(22) Anmeldetag: 20.12.2005
(51) Int. Cl.: B62D 55/26

(54) **KETTENSTEG FÜR EINE LAUFKETTE VON RAUPENFAHRZEUGEN, INSBESONDERE PISTENFAHRZEUGE ODER LOIPENSPURGERÄTE**
GROUSER FOR A CRAWLER CHAIN OF CATERPILLAR VEHICLES, IN PARTICULAR TRACK VEHICLES OR SNOW TRACK DEVICES
CRAMPON CONÇU POUR UNE CHAINE A CHENILLE DE VEHICULE CHENILLE, NOTAMMENT POUR UNE CHAINE A CHENILLE DE VEHICULE DE PISTE, OU DE MOTONEIGE

(30) Priorität: 22.12.2004 AT 21452004
(43) Veröffentlichungstag der Anmeldung: 05.09.2007
(73) Patentinhaber: Prinoth A.G., 39049 Sterzing (IT)
(72) Erfinder: RUNGGALDIER, Martin, I-39047 St. Christina (IT); PAHL, Volker, I-39030 Vintl (IT)
(74) Vertreter: Jorio, Paolo
(86) Internationale Anmeldenummer: PCT/EP2005/013692
(87) Internationale Veröffentlichungsnummer: WO 2006/069671

(56) Entgegenhaltungen:
- CH-A- 692 497
- DE-A1- 10 303 483
- DE-A1- 10 303 485
- US-B1- 6 296 330

## Beschreibung

Die Erfindung betrifft einen Kettensteg für eine Laufkette von Raupenfahrzeugen, insbesondere Pistenfahrzeuge oder Loipenspurgeräte, mit einem Träger mit einem Aufnahmebereich für eine eingesetzte Leiste, wobei die Leiste durch mehrere mechanische Verbindungselemente, die mittels Querbohrungen die durch den Träger reichen, mit dem Träger verbunden ist. Weiters betrifft die Erfindung ein Raupenfahrzeug, insbesondere Pistenfahrzeug oder Loipenspurgerät, mit einer Laufkette mit einem zuvor genannten Kettensteg und wenigstens einem Antriebsrad für die Laufkette.

Gattungsgemäße Kettenstege werden in Raupenfahrzeugen eingesetzt, da sich herkömmliche einteilige Kettenstege, die z.B. aus Aluminium bestehen, im Betrieb rasch abnützen. Einteilige Kettenstege, die beispielsweise aus Stahl bestehen, sind für den Betrieb zu schwer. Nach bekanntem Stand der Technik werden daher mehrteilige Kettenstege benützt, bei denen eine Leiste, beispielsweise eine so genannte Verschleißleiste in der Form einer Zahnleiste aus Stahl in einem Träger aus einem leichteren Material, insbesondere aus Leichtmetall, wie z.B. Aluminium oder aus Kunststoff, in den Träger, der einen Aufnahmebereich aufweist, eingesetzt wird. Derartige Leisten werden in den Aufnahmebereich des Trägers nach bekanntem Stand der Technik, zum Beispiel nach DE10303485, durch mechanische Verbindungselemente, wie Nieten, Schrauben oder durch Bolzen miteinander verbunden, um ein Herausfallen oder ein seitliches Verschieben der Leiste zu verhindern.

Nachteilig an solchen Kettenstegen ist, dass die Leiste derartiger Kettenstege durch die Schwächung des Materials im mechanischen Verbindungsbereich häufig bricht. Insbesondere erfolgt der Bruch der Leiste dort, wo ein Antriebsrad an die Laufkette im Bereich des Kettensteges angreift.

Aufgabe der Erfindung ist daher die Entwicklung eines Kettensteges mit verringerten Brucheigenschaften.

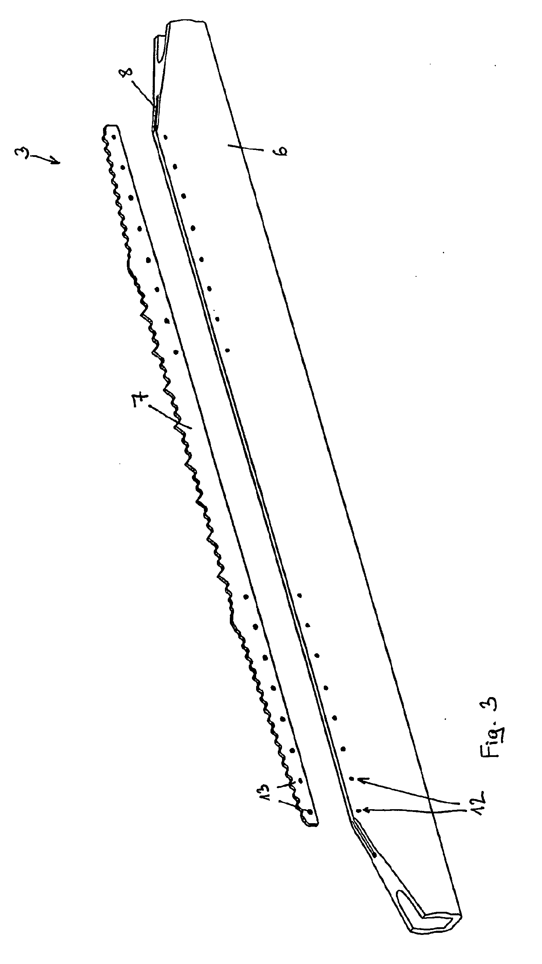

Erfindungsgemäß wird dies dadurch erreicht, dass die mechanischen Verbindungselemente unterschiedliche Abstände zueinander aufweisen. Insbesondere ist es günstig, dort größere Abstände zu wählen, wo hohe mechanische Spannungen auftreten, was in der Regel im Bereich des Eingriffs des Antriebsrades an den Kettensteg der Fall ist. Durch eine derartige Anordnung der mechanischen Verbindungselemente wird die Wahrscheinlichkeit eines Bruches des Kettensteges an den Stellen verringert, wo das Material beispielsweise durch Anbohren oder Durchbohren geschwächt ist. Günstig hat es sich außerdem erwiesen, wenn es wenigstens zwei Gruppen von Abständen der mechanischen Verbindungselemente, gibt, die einen ersten Abschnitt D₁ und einen zweiten Abstand D₂ aufweisen (siehe dazu Fig. 3). Besonders günstig ist es, wenn der Abstand D₂ im Wesentlichen in der Mitte der Leiste angeordnet ist, insbesondere wenn das Antriebsrad des Raupenfahrzeuges in der Mitte der Leiste eingreift.

Es hat sich herausgestellt, dass - abhängig von der Größe der Laufkette - es günstig ist, den Abstand D₂ größer als das etwa Fünffache des Abstandes D₁ zu wählen, vorzugsweise aber größer als das etwa Siebenfache. Der erste Abschnittsbereich D₁ ist in einer Ausführungsvariante zwischen 2 cm und 10 cm und D₂ zwischen 20 cm und 40 cm. Ein bevorzugtes Ausführungsbeispiel weist einen Abstand D₁ von etwa 4 cm und einen Abstand D₂ von etwa 30 cm auf. Weiters hat es sich als günstig erwiesen, zusätzliche Verbindungen einzubringen, die das Material nicht schwächen, um damit Spannungen, insbesondere im Bereich D₂ besser entlang der Leiste zu verteilen. Eine solche weitere Verbindung kann beispielsweise abschnittsweise, insbesondere aber im Bereich D₂ erfolgen. Bevorzugte Mechanismen für eine solche zusätzliche Verbindung wäre es, die Leiste mit dem Aufnahmebereich des Trägers durch Kleben, Toxen und/oder Pressen zusätzlich zu verbinden.

Darüber hinaus ist es günstig, den vorzugsweise U-förmigen Aufnahmebereich und die Leiste formschlüssig miteinander zu verbinden. In einer weiteren Ausführungsvariante ist außerdem vorgesehen, dies Leiste zumindest abschnittsweise reibschlüssig in den Aufnahmebereich einzubringen. Dies kann beispielsweise durch Zusammenpressen des Trägers mit einer formschlüssig eingebrachten Leiste erfolgen oder aber durch Einbringen einer Leiste in den Aufnahmebereich ohne Spiel. Besonders im Bereich D₂ ist ein reibschlüssiges Einbringen der Leiste in den Aufnahmebereich günstig. Das Einkleben der Leiste in den Aufnahmebereich des Trägers kann mittels unterschiedlicher Klebemechanismen erfolgen. Beispielsweise können physikalisch abbindende Klebstoffe oder chemisch abbindende bzw. härtende Klebstoffe verwendet werden. Als physikalisch abbindende Klebstoffe kommen insbesondere lösemittelhaltige Nassklebstoffe, Dispersionsklebstoffe, Schmelzklebstoffe, Kontaktklebstoffe, Haftklebstoffe oder Plastisole in Frage. Chemisch abbindende Klebstoffe umfassen beispielsweise Cyanacrylat-Klebstoffe, Methylmethacrylat-Klebstoffe, anaerobhärtende Klebstoffe, strahlenhärtende Klebstoffe, Phenol-Formaldehydharz-Klebstoffe, Silikone, Polyimid-Klebstoffe, Epoxidharz-Klebstoffe und Polyurethan-Klebstoffe. Bei einem bevorzugten Ausführungsbeispiel wird ein anaerobhärtender Klebstoff auf Basis von Urethan und Methacrylat verwendet. Die Verwendung eines anaerobhärtenden Klebstoffes ist insofern günstig, da ein solcher Klebstoff in den Aufnahmebereich des Trägers eingebracht werden kann und das Abhärten nach erfolgtem Einbringen der Leiste trotzdem auch ohne Sauerstoffzufuhr erfolgt. Außerdem weisen solche Klebstoffe günstige Klebeeigenschaften auch in unterschiedlichen Temperaturbereichen auf. Daher werden derartige Klebstoffe häufig zur Verbindung von Metall auf Metall verwendet. Erfindungsgemäß sind aber auch andere Klebstoffe denkbar, die ähnlich gute Eigenschaften unter thermischer Belastung sowie zur Metallverbindung aufweisen.

Weitere Vorteile und Details werden anhand der Figuren erläutert. Dabei zeigt
- Fig. 1: schematisch ein erfindungsgemäßes Raupenfahrzeug,
- Fig. 2: schematisch einen Ausschnitt in Draufsicht einer erfindungsgemäßen Laufkette,
- Fig. 3: schematisch in Explosionsdarstellung einen Kettensteg mit Leiste und Träger,
- Fig. 4: schematisch einen Ausschnitt eines Ausführungsbeispieles einer Laufkette, wo ein Antriebsrad in der Mitte des Kettensteges eingreift, und
- Fig. 5: schematisch im Querschnitt drei Ausführungsbeispiele für erfindungsgemäße Kettenstege.

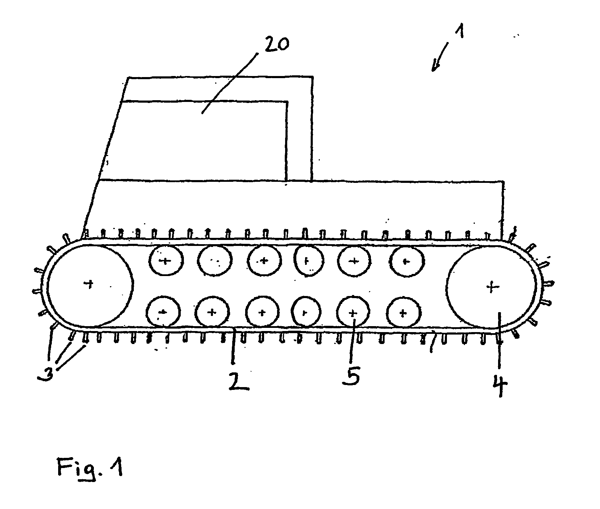

In Fig. 1 ist ein erfindungsgemäßes Raupenfahrzeug 1 gezeigt, das eine Laufkette 2, Antriebsräder 4 sowie Umlenkrollen 5 aufweist. Die Steuerung des Raupenfahrzeuges 1 erfolgt durch einen Fahrer von der Fahrerkabine 20 aus. Die Laufkette 2 weist zahlreiche erfindungsgemäße Kettenstege 3 auf, die im Betrieb in den Schnee eingreifen und dadurch die Haftung des Fahrzeuges 1 im Schnee oder auf Eis erhöhen.

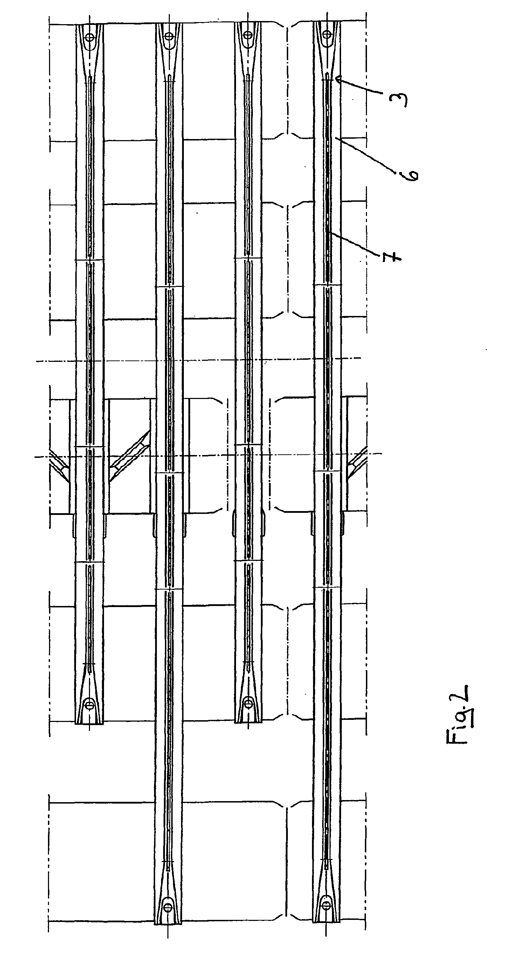

In Fig. 2 ist ein Ausführungsbeispiel für eine erfindungsgemäße Laufkette 2 gezeigt mit unterschiedlich angeordneten und unterschiedlich langen Kettenstegen 3. Das Antriebsrad 4 greift hier beispielsweise nicht in der Mitte ein, sondern könnte beispielsweise rechts und/oder links der Mitte eingreifen. Im gezeigten Ausführungsbeispiel ist es günstig, den Eingriff insbesondere rechts der Mitte auszuführen.

Die in Fig. 3 gezeigte Leiste 7 ist eine so genannte Zahnleiste 7, die Zacken aufweist, um einen besseren Halt des Fahrzeuges 1 im Schnee/Eis zu gewährleisten. Die Leiste 7 wird in die etwa U-förmige Nut des Aufnahmebereiches 8 eingeschoben und anschließend wird die Leiste 7 durch nicht gezeigte Bolzen, Schrauben oder Nieten 10 mit dem Träger 6 im Aufnahmebereich 8 verbunden. Darüber hinaus ist es auch möglich, die Leiste 7 ohne Bohrungen 13 auszuführen, und die Leiste 7 einfach mit dem Träger 6 zu verschrauben, ohne dass die Schrauben 10 die Leiste 7 vollständig durchdringen.

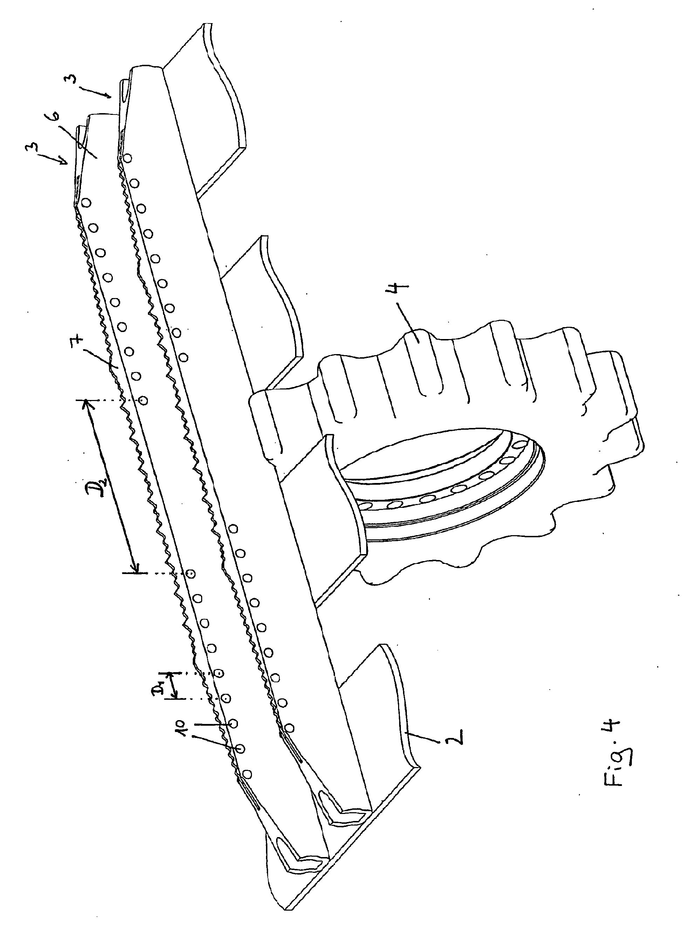

In Fig. 4 ist eine Variante gezeigt, bei der die Laufkette 2 symmetrisch angeordnet ist und wo das Antriebsrad 4 in der Mitte des Kettensteges 3 eingreift. Hier ist deutlich der erste Abschnittsbereich erkennbar, wo die mechanischen Verbindungselemente 10 einen Abstand D₁ aufweisen. Der zweite Abschnittsbereich ist in diesem Ausführungsbeispiel in der Mitte des Kettensteges angeordnet, wo die mechanischen Verbindungselemente 10 einen Abschnitt D₂ zueinander aufweisen. Im Bereich D₂ erfolgt günstigerweise der Eingriff des Antriebsrades 4. Aufgrund der erfindungsgemäßen Anordnung der mechanischen Verbindungselemente 10 ist der Bereich D₂ begünstigt vor Bruch der Leiste 7 im Gegensatz zu anderen Kettenstegen, wo im Bereich D₂ ebenfalls mechanische Verbindungselemente 10 angebracht sind.

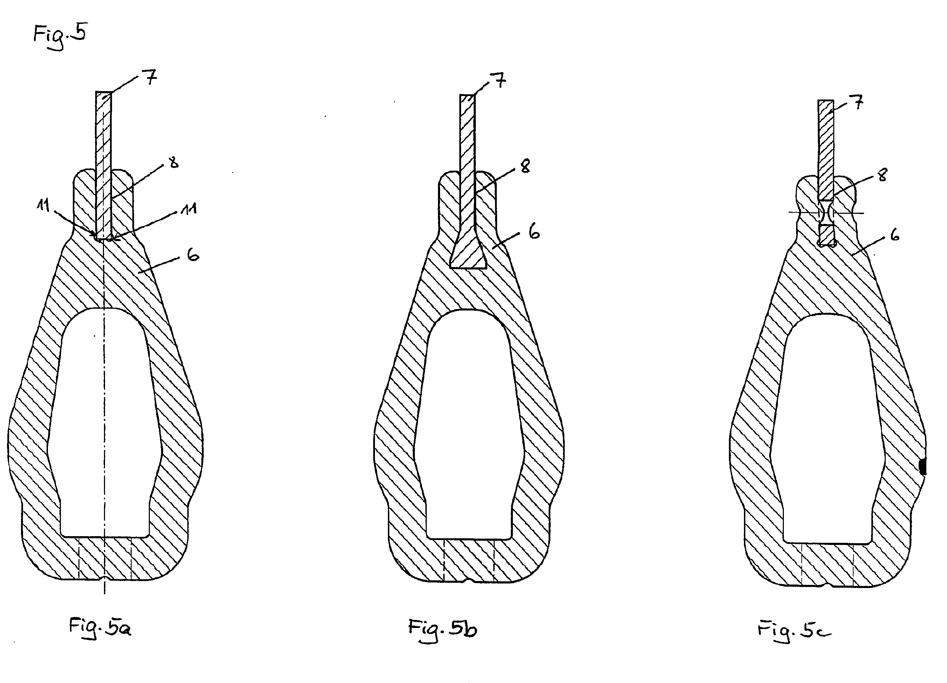

Fig. 5 zeigt drei Ausführungsvarianten für das erfindungsgemäße Einbringen der Leiste 7 in den Aufnahmebereich 8 des Trägers 6. Fig. 5a zeigt eine etwa U-förmige Nut, wo die Leiste 7 von oben eingeschoben ist. In der Ausnehmung 11 ist z.B. Raum 11 zum Einbringen eines Klebstoffes. Ein solcher Bereich 11 ist aber nicht zwingend erforderlich, da der Klebstoff nur als dünner Film eingebracht werden muss. Fig. 5b und 5c zeigen zwei Ausführungsbeispiele für formschlüssig eingebrachte Leisten 7 in den Träger 6 des Kettensteges 3. Ein weiteres Kleben, Toxen oder Einpressen ist erfindungsgemäß darüber hinaus vorgesehen. Auch kann es günstig sein, wenn die Leiste 7 im frei liegenden Bereich nach oben hin verjüngt ausgebildet ist, um ein leichteres Eindringen der Leiste 7 in Eis/Schnee zu ermöglichen.

## Patentansprüche

1. Raupenfahrzeug, insbesondere Pistenfahrzeug oder Loipenspurgerät, mit einer Laufkette (2) mit einem Kettensteg (3) und wenigstens einem Antriebsrad (4) für die Laufkette (2), wobei der Kettensteg (3) einen Träger (6) mit einem nutförmigen Aufnahmebereich für eine eingesetzte Zahnleiste (7) aufweist, wobei die Zahnleiste (7) durch mehrere mechanische Verbindungselemente (10), die mittels Querbohrungen die durch den Träger (6) reichen, mit dem Träger (6) verbunden ist, **dadurch gekennzeichnet, dass** die mechanischen Verbindungselemente (10) unterschiedliche Abstände (D1, D2) zueinander aufweisen, dass wenigstens zwei Gruppen von Verbindungselementen (10) vorgesehen sind, die untereinander einen ersten Abstand (D1) aufweisen, wobei die beiden Gruppen voneinander in einem zweiten größeren Abstand (D2) angeordnet sind, wobei das Antriebsrad (4) zwischen zwei mechanische Verbindungselemente (10) eingreift, und wobei der Abstand dieser Verbindungselemente (10) der zweite Abstand (D2) ist und größer ist als die Breite des Antriebsrades (4).

2. Raupenfahrzeug nach Anspruch 1, **dadurch gekennzeichnet, dass** der zweite Abstand (D2) im Wesentlichen in der Mitte der Zahnleiste (7) angeordnet ist.

3. Raupenfahrzeug nach einem der Ansprüche 1 oder 2, **dadurch gekennzeichnet, dass** der zweite Abstand (D2) größer als das etwa Fünffache des ersten Abstandes (D1) ist, vorzugsweise größer als das etwa Siebenfache des ersten Abstandes (D1) ist.

4. Raupenfahrzeug nach einem der Ansprüche 1 bis 3, **dadurch gekennzeichnet, dass** der erste Abstand (D1) etwa zwischen 2 cm und 10 cm und der zweite Abstand (D2) etwa zwischen 20 cm und 40 cm beträgt.

5. Raupenfahrzeug nach einem der Ansprüche 1 bis 4, **dadurch gekennzeichnet, dass** zumindest abschnittsweise zusätzliche Verbindungen zwischen Zahnleiste (7) und Träger (6) angebracht sind, vorzugsweise etwa durch Kleben, Toxen oder Pressen.

6. Raupenfahrzeug nach einem der Ansprüche 1 bis 5, **dadurch gekennzeichnet, dass** die Zahnleiste (7) zumindest abschnittsweise formschlüssig in den Aufnahmebereich (8) des Trägers (6) eingebracht ist.

7. Raupenfahrzeug nach einem der Ansprüche 1 bis 6, **dadurch gekennzeichnet, dass** die Zahnleiste (7) zumindest abschnittsweise reibschlüssig in den Aufnahmebereich (8) des Trägers (6) eingebracht ist.

8. Raupenfahrzeug nach Anspruch 5, **dadurch gekennzeichnet, dass** als Klebstoff zum Verkleben der Zahnleiste (7) mit dem Träger (6) ein chemisch härtender Klebstoff verwendet wird.

## Claims

1. Track vehicle, in particular a snow vehicle for downhill or cross-country ski runs, with a crawler chain (2) with a chain link stay (3) and at least one drive wheel (4) for the crawler chain (2), wherein the chain link stay (3) has a support (6) with a groove-shaped receiving region for an inserted toothed rail (7), wherein the toothed rail (7) is connected to the support (6) by a plurality of mechanical connecting elements (10), which extend through the support (6) by means of transverse holes, **characterised in that** the mechanical connecting elements (10) are at different spacings (D1, D2) from one another, that at least two groups of connecting elements (10) are provided, which are spaced at a first spacing (D1) from one another, wherein the two groups are arranged at a second spacing (D2) from one another, wherein the drive wheel (4) engages between two mechanical connecting elements (10), and wherein the spacing of these connecting elements (10) is the second spacing (D2) and is larger than the width of the drive wheel (4).

2. Track vehicle according to claim 1, **characterised in that** the second spacing (D2) is arranged substantially in the centre of the toothed rail (7).

3. Track vehicle according to one of claims 1 or 2, **characterised in that** the second spacing (D2) is larger than about five-times the first spacing (D1) and preferably larger than about seven-times the first spacing (D1).

4. Track vehicle according to one of claims 1 to 3, **characterised in that** the first spacing (D1) amounts to between about 2 cm and 10 cm and the second spacing (D2) amounts to between about 20 cm and 40 cm.

5. Track vehicle according to one of claims 1 to 4, **characterised in that** additional connections are provided at least in sections between the toothed rail (7) and the support (6), preferably by gluing, Tox clinching or pressing, for example.

6. Track vehicle according to one of claims 1 to 5, **characterised in that** the toothed rail (7) is inserted positively into the receiving region (8) of the support (6) at least in sections.

7. Track vehicle according to one of claims 1 to 6, **characterised in that** the toothed rail (7) is inserted by frictional engagement into the receiving region (8) of the support (6) at least in sections.

8. Track vehicle according to claim 5, **characterised in that** a chemically curing adhesive is used as adhesive to glue the toothed rail (7) to the support (6).

## Revendications

1. Véhicule chenillé, en particulier dameuse ou traceur de pistes de ski de fond, comportant une chenille (2) avec un crampon (3) et au moins un barbotin (4) pour la chenille (2), ledit crampon (3) comportant un support (6) avec une zone de réception en forme de rainure destinée à recevoir une lame dentée (7) insérée, ladite lame dentée (7) étant reliée au support (6) par plusieurs éléments d'assemblage (10) mécaniques qui passent à travers des forures transversales ménagées dans le support (6), **caractérisé en ce que** les éléments d'assemblage (10) mécaniques sont disposés à des distances (D1, D2) différentes les uns des autres, **en ce qu'**il est prévu au moins deux groupes d'éléments d'assemblage (10), dans lesquels lesdits éléments d'assemblage sont écartés les uns des autres selon une première distance (D1), lesdits deux groupes étant écartés l'un de l'autre selon une deuxième distance (D2) plus grande, le barbotin (4) s'engageant entre deux éléments d'assemblage (10) mécaniques et la distance entre ces éléments d'assemblage (10) étant la deuxième distance (D2) et étant supérieure à la largeur du barbotin (4).

2. Véhicule chenillé selon la revendication 1, **caractérisé en ce que** la deuxième distance (D2) est disposée sensiblement au milieu de la lame dentée (7).

3. Véhicule chenillé selon la revendication 1 ou 2, **caractérisé en ce que** la deuxième distance (D2) est supérieure au quintuple environ de la première distance (D1), de préférence supérieure au septuple environ de la première distance (D1).

4. Véhicule chenillé selon l'une quelconque des revendications 1 à 3, **caractérisé en ce que** la première distance (D1) mesure à peu près entre 2 cm et 10 cm, et la deuxième distance (D2) mesure à peu près entre 20 cm et 40 cm.

5. Véhicule chenillé selon l'une quelconque des revendications 1 à 4, **caractérisé en ce que**, au moins par zones, des éléments d'assemblage supplémentaires sont disposés entre la lame dentée (7) et le support (6), de préférence par collage, par clinchage Tox ou par pressage.

6. Véhicule chenillé selon l'une quelconque des revendications 1 à 5, **caractérisé en ce que**, au moins par zones, la lame dentée (7) est insérée par conjugaison de forme dans la zone de réception (8) du support (6).

7. Véhicule chenillé selon l'une quelconque des revendications 1 à 6, **caractérisé en ce que**, au moins par zones, la lame dentée (7) est insérée par assemblage par force dans la zone de réception (8) du support (6).

8. Véhicule chenillé selon la revendication 5, **caractérisé en ce que** la colle utilisée pour le collage de la lame dentée (7) avec le support (6) est une colle chimiquement durcissante.
